# EUROPEAN PATENT SPECIFICATION

(11) **EP 0 432 928 B1**
(45) Date of publication and mention of the grant of the patent: **20.03.1996**
(21) Application number: 90312769.4
(22) Date of filing: 23.11.1990
(51) Int. Cl.: D21B 1/32, D21F 1/70

(54) **Froth flotation apparatus and method**
Vorrichtung und Verfahren zum Flottieren
Appareil et procédé de flottation

(30) Priority: 11.12.1989 US 448439; 28.02.1990 US 486477
(43) Date of publication of application: 19.06.1991
(73) Proprietor: THE BLACK CLAWSON COMPANY, Middletown, Ohio 45042 (US)
(72) Inventor: Cruea, Ronald D, Gwo N.Road Sec Taipei, Taiwan (CN); Kinne, Michael F, Ohio 45067 (US); Pimley, John J, Pontypool, Gwent (GB); Vitori, Christopher M, Ohio 45044 (US); Phillippe, Irenee J, Ohio 45050 (US); Marsh, Paul G, Ohio 45013 (US)
(74) Representative: Warren, Anthony Robert

(56) References cited:
- EP-A- 0 122 747
- FR-A- 2 529 476
- US-A- 4 399 028

## Description

The present invention is directed to an apparatus and method for separating contaminant particles from a liquid suspension stock by froth flotation in a vessel, as defined in the preambles of claims 1 and 5 respectively, such as disclosed in co-owned US-A-4,399,028.

As is pointed out in the latter co-owned US-A, froth flotation apparatus is well-known for the separation of small contaminant particles from liquid suspension stock, and the present applicant is particularly interested in the development and manufacture of froth flotation apparatus for use in the de-inking of waste paper furnishes so that the resulting stock can be reused for the manufacture of paper. For example, the paper making industry presently has great interest in the de-inking of used newsprint and also in the de-inking of waste white papers, such as ledger papers, to produce a stock which can be used in the manufacture of tissue.

The above patent discloses froth flotation apparatus comprising a generally cylindrical side wall and internal partitions which cooperate to define a plurality of vertically stacked, annular flotation cells surrounding a common discharge conduit for froth. The stock suspension to be de-inked or otherwise cleaned is supplied to the top cell by an inlet which includes provision for aerating the stock as it is delivered into the cell. The contaminant-containing froth which develops on the top of the liquid in the uppermost cell is skimmed off into the froth discharge conduit, while the stock cleaned in passing through that cell is delivered to the next lower cell, again accompanied by aeration, and the same process is repeated in each of the lower cells successively as stock passes therethrough to the outlet conduit for accepted stock from the lowermost cell.

In that patent, the mechanism - known as a "sparger" - for aerating the stock as it is delivered into each cell comprises a hollow cylinder member of porous material, such as sintered bronze, mounted for rotation in the path of the stock suspension being delivered to each cell on an axis extending transversely of the inlet conduit to the cell. Compressed air is supplied to the interior of this cylinder while it is being rotated, and passage of the air through and discharge from the pores in the cylinder produce bubbles which effect the desired aeration of the stock and the creation of froth within the cell.

A primary objective of the present invention is to increase the capacity of the froth flotation apparatus in terms of the throughput volume of stock in a given time, and it accomplishes this objective through the features defined in the characterising clauses of claims 1 and 5, by increasing the volume of air distributed as bubbles in aerated stock which collect contaminant particles as they rise and create a layer of froth on top of the stock.

The primary active component of the sparger embodying the present invention is a drum-like rotor which is mounted for rotation on an axis extending transversely of the stock inlet conduit to each cell, and which has an irregular outer surface, e.g. multiple circumferentially spaced ribs or other protuberances, capable of a mixing and/or shearing action. The stock inlet conduit is also provided with an air supply conduit extending into it from upstream of the rotor, and having a discharge nozzles which extends the full width of the rotor and is positioned in close relation to the outer surface of the rotor on the upstream side thereof so that only a running clearance is provided therebetween.

In the operation of this apparatus, the liquid stock suspension is delivered to the cell through the inlet conduit at a flow velocity which may be relatively low, but the rotor is driven at a rate which will cause its outer surface to travel at a relatively high linear speed past the outlet end of the air nozzle. This surface passes the nozzle outlet at a desired high speed, thereby simultaneously drawing air from the nozzle into the stock inlet conduit and also mixing that air with the surrounding stock. It has been found in test operations that the result is to produce a tremendous mixing action, not only of air bubbles with the stock, but also of all of the constituents of the stock, with the further important advantage of significantly reduced power requirements as compared with prior froth flotation apparatus.

In a modification of this form of sparger, two rotors of the characteristics described above are arranged in side-by-side relation across the stock inlet conduit, and a separate air supply conduit is arranged to deliver air to the outer surface of each of these rotors from upstream thereof. Each rotor is driven in the direction which causes it to propel air from its supply conduit into the stock flowing towards the cell so that both rotors directly aerate the stock flowing therepast.

The invention will be more readily understood with reference to the following description of the preferred embodiments thereof in connection with the accompanying drawings, in which:-
Fig. 1 is a side elevational view, partly broken away, illustrating a froth flotation apparatus which includes a sparger in accordance with one embodiment of the invention;
Fig. 2 is a top view of the apparatus shown in Fig. 1;
Fig. 3 is a section on the line 3--3 in Fig. 4;
Fig. 4 is a greatly enlarged section on the line 4--4 in Fig. 2 and also in Fig. 3; and
Fig. 5 is a view similar to Fig. 4 showing another form of sparger.

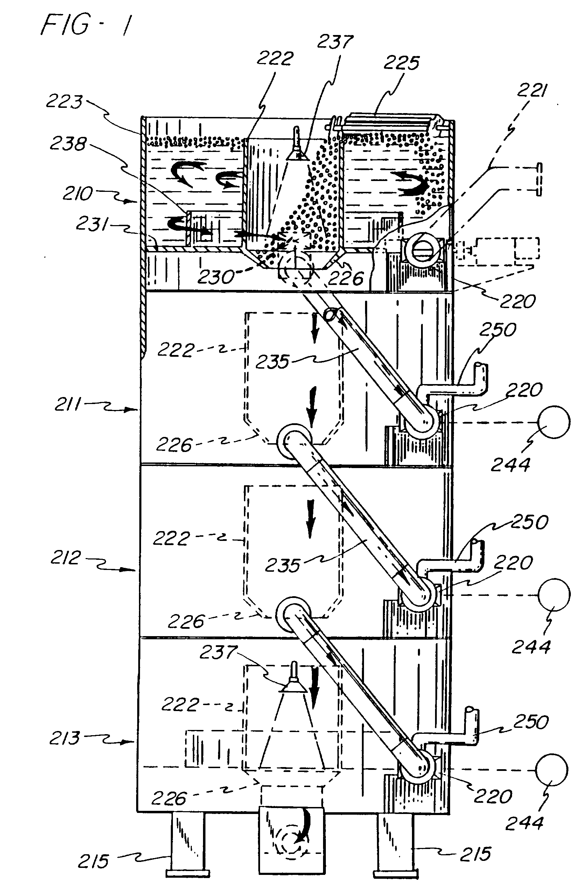

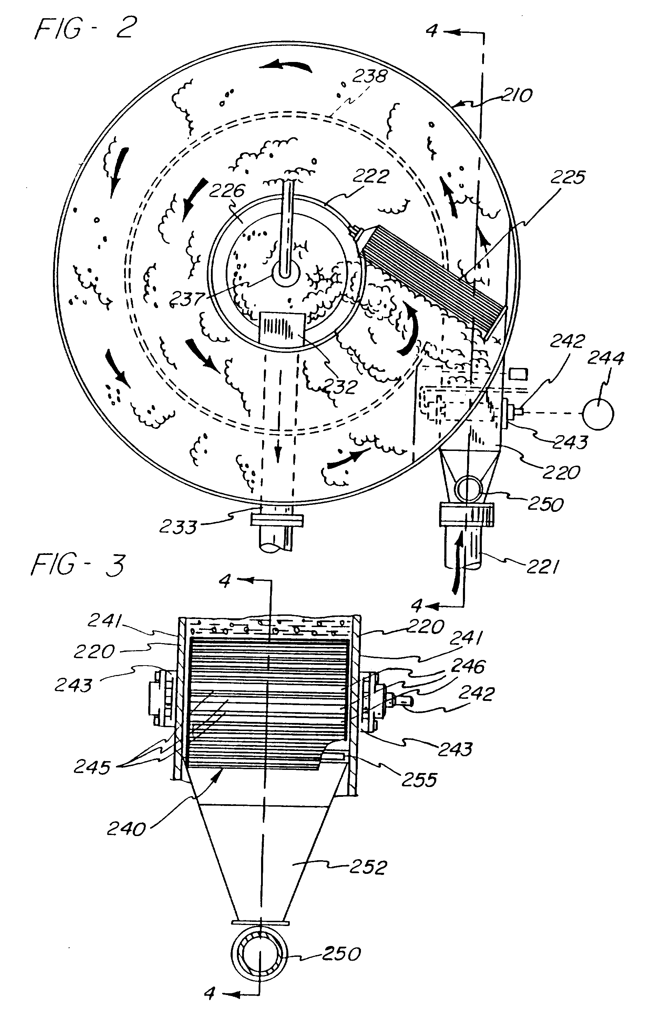

The overall construction of the froth flotation apparatus shown in Figs. 1 and 2 comprises a tower wherein four cells 210, 211, 212, and 213 are arranged in vertically stacked relation on a base structure comprising multiple legs 215. The individual cells 210-213 are each of the same construction, and each cell includes a cylindrical outer wall 223, a cylindrical inner wall or tube 222, and a cylindrical intermediate partition wall or wier 238, all of which cooperate with a common annular bottom wall 231. In operation, the stock suspension to be treated, commonly referred to as "gray" stock, is initially delivered to the uppermost cell 210 and, after undergoing froth flotation cleaning treatment successively in each of the four cells, is discharged as accepted stock from the bottom of the lowermost cell 213.

As the stock is delivered to each successive cell, it is subjected to aeration, and the resulting froth, which rises to the top of the cell, carries contaminant particles with it, and is then discharged through conduit means common to all four cells and having an outlet at the bottom of the tower. More specifically, the stock inlet conduit 220 to cell 210 is arranged to deliver the stock tangentially into the bottom portion of the cell 210 from a supply line 221 leading thereto from outside the tower. The inlet conduit 220 has therein the means for aerating the stock as it enters the cell, as described in detail hereinafter.

The tube 222 forms the inner wall of the cell 210, providing it with an annular shape, and also defines the top of a discharge conduit for froth which is common to all four cells. The upper end of the tube 222 forms an overflow outlet for froth from cell 210, and it is therefore spaced below the level of the top of the outer wall 223 of cell 210. A skimming roller 225 moves froth from the top of the liquid in cell 210 into the tube 222, as described in detail in the above-mentioned US Patent No. 4,399,028, and a funnel section 226 at the bottom of tube 222 delivers this froth to the top of the tube 222 in the next lower cell 211.

Accepted stock flows from the cell 210 through an outlet port 230 located in the wall of the tube 222 adjacent the cell bottom wall 231. An elbow 232 leads from this port 230 to a tube 233 leading radially outwardly to the outside of the cell, where it connects with a pipe 235 leading downwardly at an angle to the inlet end of the stock inlet conduit 220 for the cell 211, and the finally accepted stock leaves the bottom cell by a pipe (not shown). A shower 237 positioned at the top of each of the tubes 222 provides liquid to wash the froth down the conduit defined by the successive tubes 222 and funnel sections 226.

The tangential delivery of the stock into the bottom portion of the cell 210 causes it to travel in a vortical pattern around the interior of the cell, as also guided in part by the cylindrical wier 238, which may have a radius approximately midway between those of the outer wall of the cell and the froth tube 222. This wier prevents incoming stock from short circuiting to the outlet port 230, so that it circulates around the cell long enough for the air bubbles which are mixed therewith as it enters the cell to have time to rise to the surface with the contaminant particles attached thereto.

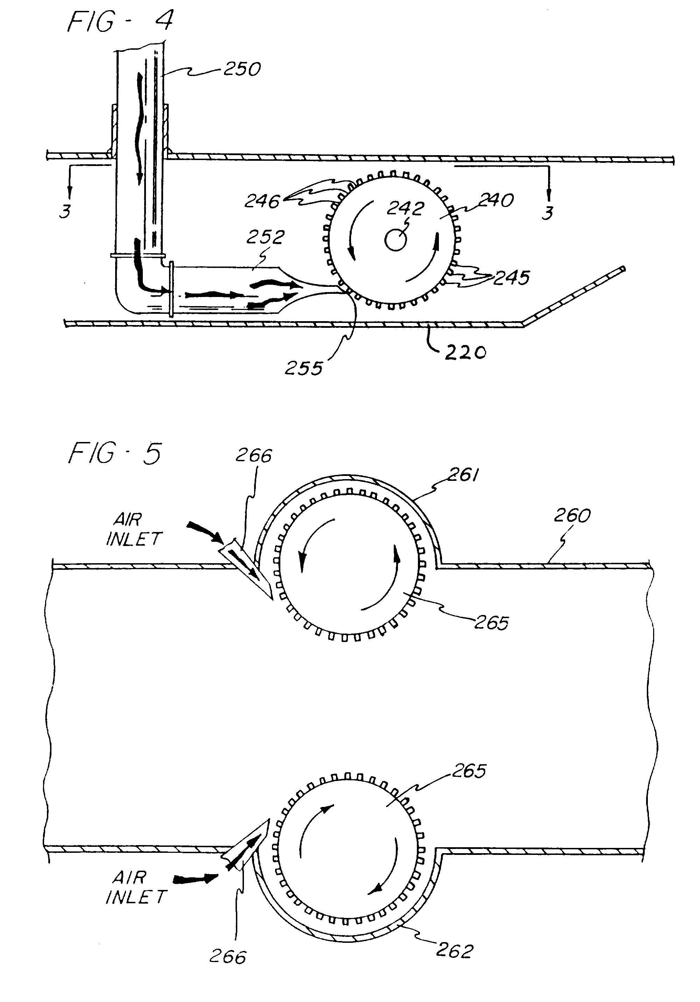

A preferred embodiment of the novel aerating mechanism or sparger embodying the invention is illustrated in Figs. 3 and 4. Its primary component is a drum-like rotor 240 comprising an imperforate generally cylindrical shell supported by end heads 241 on a shaft 242 mounted by bearings 243 to extend transversely of a rectangular portion of each stock inlet conduit 220 and driven by means such as an electric motor 244.

The outer surface of the rotor shell is provided with multiple protuberances, shown as ribs 245 extending lengthwise of the rotor in circumferentially spaced relation and of sufficient cross sectional dimensions to define a corresponding number of grooves 246 alternating therewith. For example, with the rotor having a diameter of approximately 12.7cm (5 inches) and the conduit 220 having a vertical dimension of 20.3 to 25.4cm (8 to 10 inches), successful results have been obtained with ribs 245 of rectangular section having a dimension of 3.94mm (0.155 inch) measured radially of the rotor and approximately 3.18mm (0.125 inch) measured circumferentially of the rotor, with a space 12.7mm (one-half inch) wide between adjacent ribs. Other protuberances, such as fins or bumps capable of propelling fluid in their paths, can be used in place of the longitudinal ribs 245.

The other component of the aerating mechanism is an air supply conduit 250 which enters the stock inlet conduit 220 upstream of the rotor 240 and includes a nozzle portion 252 that widens in the direction of flow therethrough to a maximum width equal to the length of the rotor 240. The conduit 250 is positioned in off-center relation with the rotor 240 such that the discharge end 255 of its nozzle portion 252 is closest to the rotor at a position which is approximately mid-way between the axis of the rotor and a plane tangent to the outer surface of the rotor and parallel with a plane through the rotor axis in the direction of flow through the conduit 220. The discharge end 255 of the nozzle 252 is accordingly beveled or rounded to conform as closely as possible with the circle defined by the radially outer surfaces of the ribs 245 while still providing running clearance therebetween.

The upstream end of the air conduit 250 may be open to the atmosphere, or it may be supplied with air under slight super atmospheric pressure by a blower or other supply source. In any event, the operation will be such that when the rotor 240 is rotated at a sufficiently high surface speed, e.g. a speed in the range of 609.6 to 1219.2m.per minute (2,000 to 4,000 ft. per minute), the resulting rapid passage of the successive ribs 245 past the nozzle end 255 will draw air from the conduit 220 at a corresponding linear speed, and will discharge this air, along with whatever stock is trapped between the ribs, into the flow of stock through conduit 220 into the associated cell.

If the stock flow is otherwise at a relatively slow linear rate, e.g. 2.44 to 3.05m. per second (8 to 10 ft. per second), which is a preferred condition, the result is a tremendous mixing action of air with the stock flowing between the rotor and the adjacent wall of conduit 220, which will in turn produce wide distribution of air bubbles in the stock and thereby create the desired froth. In addition, the same mixing action will be effective on whatever chemicals and contaminant particles are present in the stock, such particularly as chemicals conventionally used to precipitate ink as fine contaminant particles.

Among the important advantages achieved by the sparger embodying the invention is the comparatively very low power requirements for driving the rotor 240. More specifically, with the conduit 220 and rotor 240 of the dimensions noted above, when the rotor is driven while the air supply thereto is shut off, tests indicate that the power requirement is as much as 210 times greater than when air is being supplied to the air conduit 250. These facts indicate that, in operation, the rotor 240 is effectively operating in a mantle of air such that it chops that air into fine bubbles which it distributes into the stock flowing therepast, thereby creating the desired froth conditions in the stock as delivered into the associated cell 210.

Fig. 5 shows modified aerating apparatus wherein a pair of rotors is incorporated in the stock inlet conduit 260 which otherwise corresponds to the conduit 220. More specifically, each of the upper and lower walls of the conduit includes a semi-cylindrical portion 261, 262 proportioned to enclose the upper or lower half, respectively, of one of the rotors 265, each of which is of essentially the same construction as the rotor 240.

The conduit 260 and the rotors 265 are proportioned to provide a passage for stock flow between the two rotors, and each rotor is provided with its own air inlet nozzle 266 having its discharge end located in the same spatial relation to the associated rotor 265 as described above for the nozzle discharge end 255 and rotor 240. In operation, the two rotors are driven in opposite directions such that their adjacent portions both move in the same direction as the stock flow into the associated cell. Otherwise, the operation of this form of the invention is the same as already described in connection with Figs. 3 and 4.

While the method herein described, and the forms of apparatus for carrying this method into effect, constitute preferred embodiments of this invention, it is to be understood that the invention is not limited thereto and that changes may be made in either without departing from the scope of the invention as defined in the appended claims.

## Claims

1. Apparatus for separating contaminant particles from a liquid suspension stock by froth flotation, comprising a vessel (210) defining a flotation chamber having a bottom wall (231) and side walls (222, 223), means including an inlet conduit (220, 260) for delivering a stream of aerated liquid suspension stock into said chamber adjacent said bottom wall for circulation therein while the bubbles in said stock rise through the stock in said chamber to form froth adjacent the top of said chamber, means (225) for removing said froth from liquid within said chamber, and liquid outlet means (230) from said chamber, said means for delivering aerated stock to said chamber including a drum-shaped rotor (240, 265) having a central axis and mounted for rotation in said inlet conduit (220, 260) with said axis extending transversely of said conduit, and means (244) for continuously driving said rotor, characterised in that:
(a) said rotor has multiple protuberances (245) on the outer surface thereof,
(b) an air supply conduit (252, 266) is provided, extending into a portion of said inlet conduit upstream of said rotor,
(c) said air supply conduit includes a discharge nozzle (255) positioned in close relation with said outer surface of said rotor to direct air thereagainst, and
(d) said rotor drive means (244) is operable for continuously driving said rotor at a rate of rotation sufficiently high to cause said protuberances on the outer surface thereof to mix air discharged from said nozzle with the stock flowing past said rotor into said chamber.

2. Froth flotation apparatus as claimed in claim 1, wherein said nozzle (255) is located in a portion of said inlet conduit (220) between a central plane through said rotor (240) parallel with the flow direction through said conduit (220) and a plane tangent to said rotor (240) and parallel with said central plane, and the direction of rotation of said rotor causes said surface thereof to travel from said nozzle toward said tangent plane.

3. Froth flotation apparatus as claimed in claim 1 or 2, wherein said protuberances on the outer surface of said rotor (240) comprise bars (245) extending axially of said rotor in circumferentially spaced relation with each other on said rotor surface.

4. Froth flotation apparatus as claimed in claim 1, 2 or 3, further comprising a pair of said rotors (265), means mounting said rotors with said axes thereof in substantially the same plane extending transversely of the flow direction through said conduit (260) and in spaced relation such that said rotors define a passage therebetween for stock flow to said flotation chamber, a pair of said air supply conduits (266) positioned on opposite sides of the longitudinal center of said conduit, and means for driving said rotors in opposite directions such that the surfaces thereof travel in the downstream direction through said flow passage.

5. A method of removing contaminant particles from a liquid suspension stock by froth flotation in a vessel, which comprises the steps of:
(a) causing said stock to flow through an inlet conduit (250, 260) of generally rectangular section leading to said vessel,
(b) positioning a drum-shaped rotor (240, 265) in said conduit for rotation on an axis extending transversely of said conduit, and
(c) continuously rotating said rotor (240, 265), characterised by:
(d) directing a supply of air (255, 266) against protuberances provided on the outer surface of said rotor, on the upstream side of said axis, and
(e) continuously rotating said rotor (240, 265) at a speed sufficient to break up said air into bubbles and to distribute said bubbles in the stock flowing through said conduit from the vicinity of said rotor to said vessel.

6. The method as claimed in claim 5, which includes causing said rotor (240, 265) to rotate at a speed such that the linear speed of its outer surface is substantially higher than the linear flow rate of said stock in said conduit.

7. The method as claimed in claim 5 or 6, which includes directing the supply of air (225, 266) against the protuberances provided on the outer surface of the rotor, the protuberances comprising multiple bars (245) extending axially of said rotor in circumferentially spaced relation around said surface.

## Patentansprüche

1. Vorrichtung zum Abtrennen von Verunreinigungsteilchen von einer flüssigen Suspensionsmasse durch Schaumflotation mit einem Behälter (210), der eine Flotationskammer mit einer Bodenwand (231) und Seitenwänden (222, 223) begrenzt, Einrichtungen einschließlich einer Einlaßleitung (220, 260) zur Einführung eines Stromes von belüfteter flüssiger Suspensionsmasse in die Kammer nahe der Bodenwand für eine Zirkulation darin, während die Blasen in der Masse durch die Masse in der Kammer unter Bildung von Schaum nahe dem oberen Ende der Kammer aufsteigen, Einrichtungen (225) zur Entfernung des Schaumes von der Flüssigkeit in der Kammer und Flüssigkeitsauslaßeinrichtungen (230) aus der Kammer, wobei die Einrichtungen zur Einführung von belüfteter Masse in die Kammer einen trommelförmigen Rotor (240, 265) mit einer Mittelachse, der zur Drehung in der Einlaßleitung (220, 260) angeordnet ist, wobei sich diese Achse quer zu der Leitung erstreckt, und Einrichtungen (244) zum kontinuierlichen Antreiben des Rotors einschließen, **dadurch gekennzeichnet**, daß
a) der Rotor mehrfache Vorsprünge (245) auf seiner Außenoberfläche hat,
b) eine Luftzufuhrleitung (252, 266) vorgesehen ist, die sich in einen Teil der Einlaßleitung aufstromwärts von dem Rotor erstreckt,
c) die Luftzufuhrleitung eine Entnahmedüse (255) einschließt, die in enger Beziehung zu der Außenoberfläche des Rotors angeordnet ist, um Luft darauf zu lenken, und
d) die Rotorantriebseinrichtungen (244) für kontinuierlichen Antrieb des Rotors mit einer genügend hohen Rotationsgeschwindigkeit betätigbar sind, um zu bewirken, daß die Vorsprünge auf seiner Außenoberfläche von dieser Düse abgegebene Luft mit der Masse mischen, die an dem Rotor vorbei in die Kammer fließt.

2. Schaumflotationsvorrichtung nach Anspruch 1, bei der die Düse (255) in einem Teil der Einlaßleitung (220) zwischen einer Mittelebene durch den Rotor (240) parallel zu der Fließrichtung durch die Leitung (220) und einer Ebene tangential zu dem Rotor (240) und parallel zu der Mittelebene angeordnet ist und die Rotationsrichtung des Rotors bewirkt, daß seine Oberfläche von dieser Düse zu der Tangentialebene wandert.

3. Schaumflotationsvorrichtung nach Anspruch 1 oder 2, bei der die Vorsprünge auf der Außenoberfläche des Rotors (240) Stäbe (245) umfassen, die sich axial bezüglich des Rotors im Abstand voneinander am Umfang auf der Rotoroberfläche erstrecken.

4. Schaumflotationsvorrichtung nach Anspruch 1, 2 oder 3 weiterhin mit einem Paar der Rotoren (265), Einrichtungen, die diese Rotoren mit ihren Achsen im wesentlichen in der gleichen Ebene quer zu der Fließrichtung durch die Leitung (260) und sich im Abstand erstreckend befestigen, so daß die Rotoren zwischen sich einen Durchgang für Massenfluß zu der Flotationskammer begrenzen, einem Paar der Luftzufuhrleitungen (266), die an entgegengesetzten Enden in der Mitte der Leitungen in Längsrichtung angeordnet sind, und Einrichtungen zum Antreiben der Rotoren in entgegengesetzten Richtungen, so daß deren Oberflächen in der Abstromrichtung durch den Strömungsdurchgang wandern.

5. Verfahren zur Entfernung von Verunreinigungsteilchen aus einer flüssigen Suspensionsmasse durch Schaumflotation in einem Behälter mit den Stufen, in denen man
a) die Masse durch eine Einlaßleitung (250, 260) mit allgemein rechteckigem Querschnitt, die zu dem Behälter führt, fließen läßt,
b) einen trommelförmigen Rotor (240, 265) in dieser Leitung für eine Drehung um eine Achse, die sich quer zu der Leitung erstreckt, anordnet und
c) den Rotor (240, 265) kontinuierlich rotieren läßt, **dadurch gekennzeichnet**, daß man
d) eine Luftzufuhr (255, 266) gegen Vorsprünge, die auf der Außenoberfläche des Rotors vorgesehen sind, auf der Aufstromseite der Achse richtet und
e) den Rotor (240, 265) mit genügender Geschwindigkeit kontinuierlich dreht, um die Luft in Blasen aufzubrechen und diese Blasen in der durch die Leitung aus der Nähe des Rotors zu dem Behälter fließenden Masse zu verteilen.

6. Verfahren nach Anspruch 5, welches einschließt, daß man den Rotor (240, 265) mit einer solchen Geschwindigkeit rotieren läßt, daß die lineare Geschwindigkeit seiner Außenoberfläche wesentlich höher als die lineare Fließgeschwindigkeit der Masse in der Leitung ist.

7. Verfahren nach Anspruch 5 oder 6, welches einschließt, daß man die Luftzufuhr (225, 266) gegen die Vorsprünge richtet, die auf der Außenoberfläche des Rotors vorgesehen sind, wobei die Vorsprünge mehrere Stäbe (245) umfassen, die sich axial bezüglich des Rotors in einem Abstand am Umfang um die Oberfläche erstrecken.

## Revendications

1. Appareil pour séparer des particules de contaminants à partir d'une pâte à papier en suspension dans un liquide par flottation par écumage, comprenant une cuve (210) définissant une chambre de flottation ayant une paroi de fond (231) et des parois latérales (222, 223), des moyens comprenant un conduit d'entrée (220, 260) pour délivrer un flux de pâte à papier aérée en suspension dans un liquide dans ladite chambre à proximité de ladite paroi de fond pour circuler à l'intérieur, tandis que les bulles dans ladite pâte à papier montent à travers la pâte à papier dans ladite chambre pour former de l'écume à proximité de l'extrémité supérieure de ladite chambre, des moyens (225) pour extraire ladite écume du liquide à l'intérieur de ladite chambre, et des moyens de sortie de liquide (230) hors de ladite chambre, lesdits moyens pour délivrer de la pâte à papier aérée vers ladite chambre comprenant un rotor en forme de tambour (240, 265) ayant un axe central et monté en rotation dans ledit conduit d'entrée (220, 260) avec ledit axe s'étendant transversalement audit conduit, et des moyens (244) pour entraîner en continu ledit rotor, caractérisé en ce que :
(a) ledit rotor présente plusieurs protubérances (245) sur sa surface extérieure,
(b) un conduit d'alimentation en air (252, 266) est prévu, s'étendant dans une partie dudit conduit d'entrée en amont dudit rotor,
(c) ledit conduit d'alimentation en air comprend une tuyère de décharge (255) positionnée à proximité de ladite surface extérieure dudit rotor pour diriger de l'air contre celle-ci, et
(d) lesdits moyens d'entraînement du rotor (244) sont opérants pour entraîner en continu ledit rotor à une vitesse de rotation suffisamment élevée pour amener lesdites protubérances sur sa surface extérieure à mélanger de l'air déchargé à partir de ladite tuyère avec la pâte à papier s'écoulant derrière ledit rotor dans ladite chambre.

2. Appareil de flottation par écumage selon la revendication 1, dans lequel ladite tuyère (255) est située dans une partie dudit conduit d'entrée (220) entre un plan central à travers ledit rotor (240) parallèle à la direction d'écoulement à travers ledit conduit (220) et un plan tangent audit rotor (240) et parallèle avec ledit plan central et la direction de rotation dudit rotor amenant ladite surface de celui-ci à se déplacer à partir de ladite tuyère vers ledit plan tangent.

3. Appareil de flottation par écumage selon la revendication 1 ou 2, dans lequel lesdites protubérances sur la surface dudit rotor (240) comprennent des barres (245) s'étendant axialement par rapport audit rotor espacées circonférentiellement les unes des autres sur ladite surface du rotor.

4. Appareil de flottation par écumage selon la revendication 1, 2 ou 3, comprenant en outre une paire desdits rotors (265), des moyens montant lesdits rotors avec leurs axes sensiblement dans le même plan s'étendant transversalement par rapport à la direction d'écoulement à travers ledit conduit (260) et en relation espacée de telle sorte que lesdits rotors définissent un passage entre eux pour un écoulement de pâte à papier vers ladite chambre de flottation, une paire desdits conduits d'alimentation en air (266) positionnés sur des côtés opposés du centre longitudinal dudit conduit et des moyens pour entraîner lesdits rotors en direction opposée de telle sorte que leurs surfaces se déplacent en direction aval à travers ledit passage d'écoulement.

5. Procédé d'extraction de particules de contaminants à partir d'une pâte à papier en suspension dans un liquide par flottation par écumage dans une cuve, qui comprend les étapes de :
(a) faire écouler ladite pâte à papier à travers un conduit d'entrée (250, 260) de section généralement rectangulaire conduisant vers ladite cuve,
(b) positionner un rotor en forme de tambour (240, 265) dans ledit conduit en rotation sur un axe s'étendant transversalement audit conduit, et
(c) faire tourner en continu ledit rotor (240, 265),
caractérisé par :
(d) diriger une alimentation d'air (255, 266) contre des protubérances prévues sur la surface extérieure dudit rotor, sur le côté amont dudit axe , et
(e) faire tourner en continu ledit rotor (240, 265) à une vitesse suffisante pour diviser ledit air en bulles et pour distribuer lesdites bulles dans la pâte à papier s'écoulant à travers ledit conduit à partir de la proximité dudit rotor vers ladite cuve.

6. Procédé selon la revendication 5, qui comprend de faire tourner ledit rotor (240, 265) à une vitesse telle que la vitesse linéaire de sa surface extérieure est sensiblement supérieure à la vitesse d'écoulement linéaire de ladite pâte à papier dans ledit conduit.

7. Procédé selon la revendication 5 ou la revendication 6, qui comprend de diriger l'alimentation en air (225, 266) contre les protubérances prévues sur la surface extérieure du rotor, les protubérances comprenant plusieurs barres (245) s'étendant axialement par rapport audit rotor espacées circonférentiellement autour de ladite surface.
